# EUROPEAN PATENT APPLICATION

(11) **EP 4 681 993 A2**
(43) Date of publication of application: **21.01.2026**
(21) Application number: 25188800.4
(22) Date of filing: 10.07.2025
(51) Int. Cl.: B60R 13/02, B60K 35/10, B60K 35/22, G02F 1/01, G02F 1/015, G02F 1/157

(54) **VEHICLE PROVIDED WITH A COMPONENT WITH A VARIABLE APPEARANCE THANKS TO AN ELECTROCHROMIC FILM**

(30) Priority: 19.07.2024 IT 202400016762
(71) Applicant: FERRARI S.p.A., 41100 Modena (IT)
(72) Inventor: NICOLETTA, Epifanio Alberto, 41100 MODENA (IT); VITALONI, Francesco, 41100 MODENA (IT); FUMAROLA, Gianluca, 41100 MODENA (IT); DUSINI, Luca, 41100 MODENA (IT); ORSINI, Valentina, 41100 MODENA (IT)
(74) Representative: Studio Torta S.p.A.

(57) **Abstract**

A vehicle (1) having a passenger compartment (5) and at least one component (9; 10; 14), which is opaque and non-reflective and has at least one wall (15) visible to an occupant of the passenger compartment (5). The component (9; 10; 14) has: at least one electrochromic film (16) covering the wall (15); and an electric circuit (17), which is connected to opposite ends of the electrochromic film (16) and is configured to apply, when necessary, an electric voltage to the electrochromic film (16) so as to change the optical characteristics of the electrochromic film (16).

## Description

### CROSS-REFERENCE TO RELATED APPLICATIONS

This patent application claims priority from Italian patent application no. 102024000016762 filed on July 19, 2024, the entire disclosure of which is incorporated herein by reference.

### TECHNICAL FIELD

The present invention relates to a vehicle provided with a component with a variable appearance, namely with a component of which it is possible to change the external appearance in order to communicate in a simple, fast and intuitive manner a certain type of information to the driver or passengers.

### PRIOR ART

Normally, inside a vehicle in order to communicate a certain type of information to the driver or passengers, light indicators (which turn on or off) or digital screens (which are fully programmable) are utilized. However, the light indicators are relatively small and not very evident and therefore a change in their state is not always quickly noticed by the driver or passengers; whereas, the digital screens are relatively delicate (fragile), quite bulky and require a fairly high amount of electric energy to operate and consequently it is not possible to insert too many digital screens inside the vehicle and it is not simple to insert a digital screen in a transportable component powered by a battery (such as, for example, the ignition key).

Patent application FR3073468A1 describes a structure of a passenger compartment of a vehicle provided with a digital screen at least partially covered by an electrochromic film which can alternatively assume a translucent state or an opaque state.

Patent application WO2020025085A1 describes a component of a vehicle comprising a display element (namely a digital screen) covered by a surface layer which becomes transparent when activated.

Patent US7702434B2 describes a screen for a vehicle at least partially covered by a decorative layer which can alternatively be opaque or transparent.

### DESCRIPTION OF THE INVENTION

The object of the present invention is to provide a vehicle provided with a component with a variable appearance which is devoid of the drawbacks described above and, at the same time, is easy and cost-effective to manufacture.

According to the present invention, a vehicle provided with a component with a variable appearance is provided, according to what claimed by the appended claims.

The claims describe preferred embodiments of the present invention forming integral part of the present description.

### BRIEF DESCRIPTION OF THE DRAWINGS

The present invention will now be described with reference to the accompanying drawings, which illustrate some non-limiting embodiments thereof, wherein:
- Figure 1 is a perspective view of a road vehicle manufactured in accordance with the present invention;
- Figure 2 is a perspective view, with parts removed for clarity, of a dashboard of the road vehicle of Figure 1;
- Figure 3 is a schematic perspective view of a component with a variable appearance, in particular an ignition key, of the road vehicle of Figure 1;
- Figure 4 is a schematic view of an electric control circuit of an electrochromic film of the component of Figure 3;
- Figures 5 and 6 are schematic views of two different aspects of the component of Figure 3;
- Figures 7 and 8 are schematic views of two different aspects of another component with a variable appearance, in particular a cover of an airbag housing of the steering wheel; and
- Figures 9, 10 and 11 are schematic views of three different aspects of a further component with a variable appearance, in particular a finishing panel of a central tunnel.

### PREFERRED EMBODIMENTS OF THE INVENTION

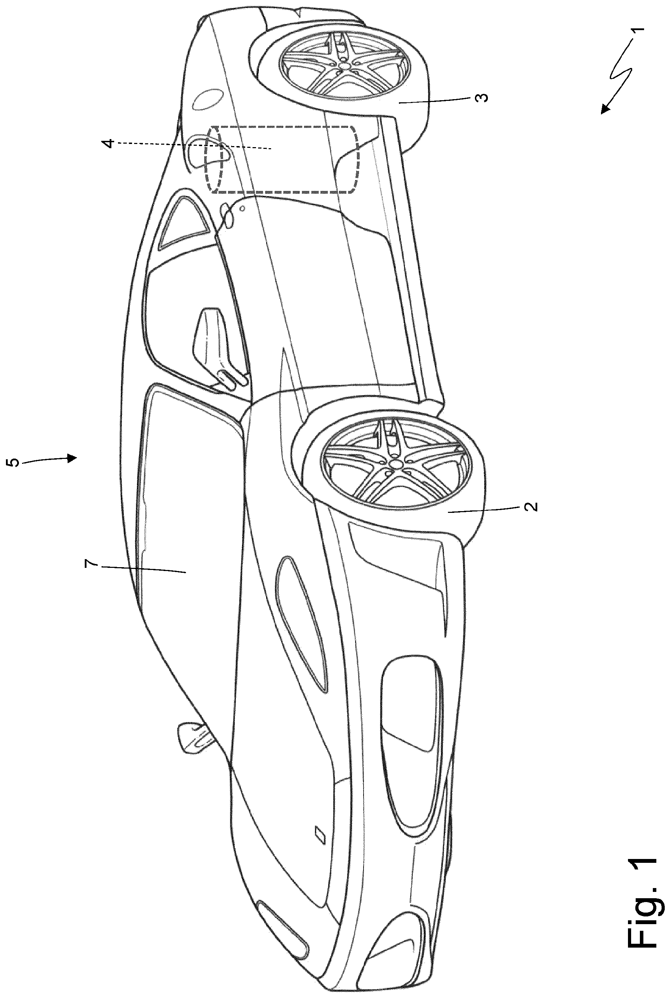

In Figure 1, reference numeral 1 indicates, as a whole, an electrically driven road vehicle (in particular, car) having two front wheels 2 (which can be driven or driving) and two rear wheels 3 (which are driving).

The road vehicle 1 comprises an exclusively electric powertrain system 4, namely exclusively provided with one or more electric motors which are connected to the rear wheels 3 (and possibly also to the front wheels 2).

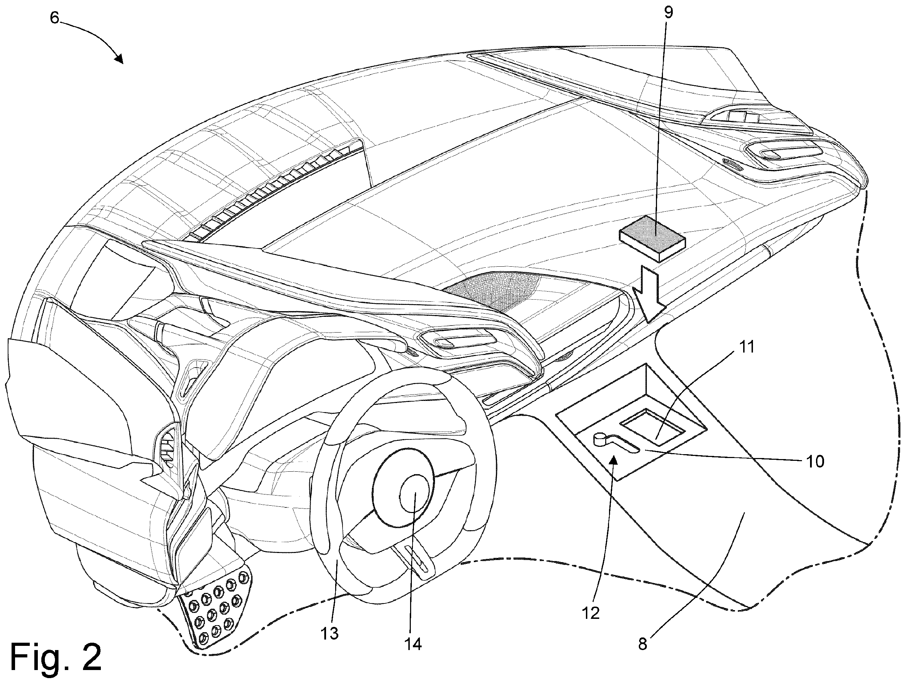

The road vehicle 1 comprises a passenger compartment 5 which is arranged between the two front wheels 2 and the two rear wheels 3, is delimited at the front by a dashboard 6 (illustrated in Figure 2) arranged under a windshield 7, and houses (at least) two seats which are separated from each other by a central tunnel 8 (illustrated in Figure 2) which is arranged along a longitudinal symmetry axis of the vehicle 1 (namely of the passenger compartment 5).

According to what is illustrated in Figure 2, the vehicle 1 comprises an (at least one) ignition key 9 which, among other things, is configured to authorize the enabling of the running of the road vehicle 1 (the so-called *"ignition"* of the powertrain system 4), namely to authorize the movement of the road vehicle 1 under the thrust of the powertrain system 4. The ignition key 9 comprises an electronic device (typically a transponder) which can be remotely (namely without direct contact) interrogated and contains encrypted security codes.

The central tunnel 8 is delimited at the top by a finishing panel 10 which is substantially horizontal. In the finishing panel 10 there is a housing 11 configured to accommodate and contain the ignition key 9 and a gearshift control 12 which is arranged through the finishing panel 10 next to the housing 11.

The passenger compartment 5 houses a pair of seats (not illustrated in Figure 2): a left seat is dedicated to the driver and is arranged in front of a steering wheel 13 provided with an airbag, which in case of front or angled (i.e. with an obstacle arranged for example at 30° with respect to the forward direction of the road vehicle 1) impact has the function to avoid that the torso and the head of the driver violently hit the steering wheel 13 and rigid parts of the bodywork arranged in front of the driver such as for example the uprights of the frame or the windshield 7. The airbag comprises a housing, which is obtained in a central hub of the steering wheel 13 and is closed at the front by a cover 14 which is shaped so as to open spontaneously in case of inflation of a bag of the airbag and under the thrust of the bag.

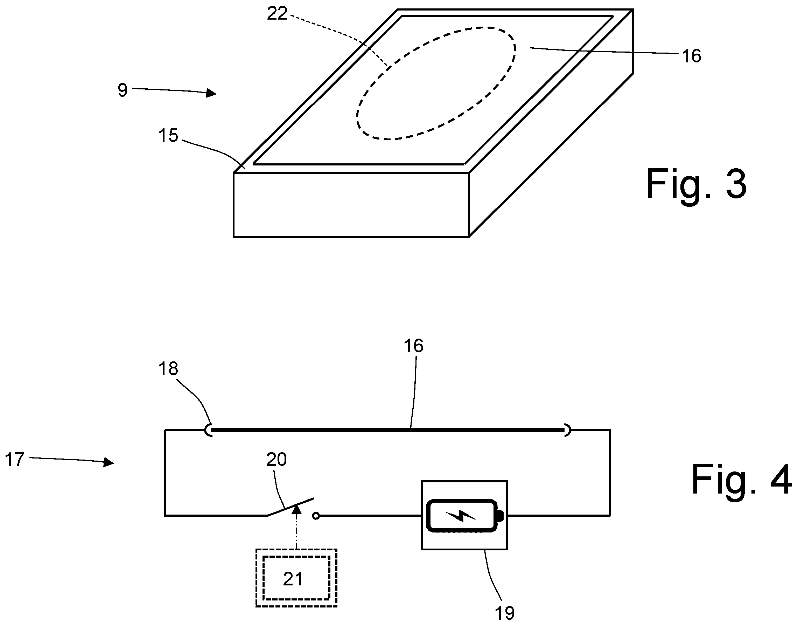

According to what is illustrated in Figure 3, the ignition key 9 is a component which is opaque (namely does not allow the light radiations to pass through it and has a zero-transparency coefficient) and non-reflective (namely is not capable of reflecting light like a mirror) of the road vehicle 1. The ignition key 9 has a parallelepiped shape with a rectangular cross-section and has an upper wall 15 opposite a lower wall resting in the housing 11**;** the wall 15 is always visible to an occupant (driver or passenger) of the passenger compartment 5.

The component 9 comprises an electrochromic film 16 (partially or completely) covering the upper wall 15: the electrochromic film 16 is capable of changing its optical characteristics in response to an electric stimulus. Furthermore, the component 9 comprises an electric circuit 17 (illustrated in Figure 4) which is connected to opposite ends of the electrochromic film 16 and is configured to apply, when necessary, an electric voltage to the electrochromic film 16 so as to change the optical characteristics of the electrochromic film 16.

The application of the electric voltage to the electrochromic film 16 changes the degree of transparency of the electrochromic film 16 which can thus become transparent allowing what is under the electrochromic film 16 to be seen or it can become opaque hiding what is under the electrochromic film 16 from sight.

According to a possible embodiment, the electrochromic film 16 is transparent in the absence of electric voltage and becomes opaque in the presence of electric voltage; namely in this embodiment, the electrochromic film 16 utilizes the PDLC (*"Polymer Dispersed Liquid Crystal*") technology which distributes nematic liquid crystals in a polymeric compound deposited between two polyester films. The nematic liquid crystals are electrically orientable and have a cylindrical or ellipsoidal shape (with one of the three axes different from the other two) and this embodiment is at the basis of the anisotropic behaviour of these materials. The application of an electric field arranges the molecules of the liquid crystal in an orderly fashion allowing the light to pass through the electrochromic film 16 in an undisturbed manner (without deviation) showing the transparent electrochromic film 16 to our eyes. Removing the electric field, the molecules of the liquid crystal return to a disordered/random state and the light will thus be deflected (diffused) by the molecules over and over again, preventing our eyes from reconstructing the images of the objects placed beyond the electrochromic film 16 (translucent state).

According to another embodiment, the electrochromic film 16 is opaque in the absence of electric voltage and becomes transparent in the presence of electric voltage namely in this embodiment, the electrochromic film 16 utilizes the PNLC ("*Polymer Network Liquid Crystal*") technology.

According to what is illustrated in Figure 4, the electric circuit 17 comprises two electrodes 18 connected to two opposite ends of the electrochromic film 16, a battery 19, and a switch 20 configured to connect or disconnect the electric power supply coming from the battery 19 to/from the electrodes 18 (namely to/from the opposite ends of the electrochromic film 16). The switch 20 is controlled by a control unit 21 which, among other things, determines what level of transparency the electrochromic film 16 must have and, consequently, what appearance the upper wall 15 of the ignition key 9 must have.

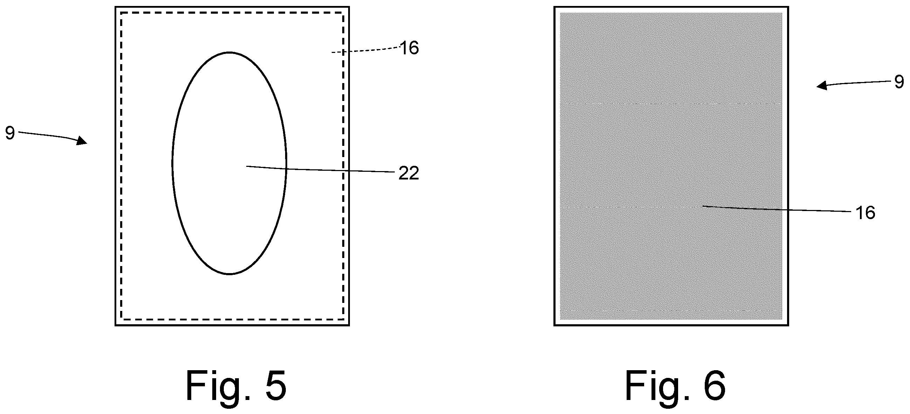

According to what is illustrated in Figure 3, on the upper wall 15 of the ignition key 9 there is (printed or glued) at least one graphic sign 22 which is arranged under the electrochromic film 16: when the electrochromic film 16 is transparent the graphic sign 22 is visible through the electrochromic film 16 (as is illustrated in Figure 5), whereas when the electrochromic film 16 is opaque (not transparent) the graphic sign 22 is concealed from sight (hidden) by the electrochromic film 16 (as is illustrated in Figure 6). Therefore, by acting on the transparency of the electrochromic film 16, it is possible to hide or display the graphic sign 22 arranged under the electrochromic film 16; in other words, the application of the electric voltage to the electrochromic film 16 changes the degree of transparency of the electrochromic film 16 for making the graphic sign 22 visible or hidden. Depending on the technology utilized in the electrochromic film 16, the graphic sign 22 is hidden in the absence of electric voltage and becomes visible in the presence of electric voltage (PDLC technology) or the graphic sign 22 is hidden in the presence of electric voltage and becomes visible in the absence of electric voltage (PNLC technology).

The graphic sign 22 (schematically illustrated in the accompanying figures) can comprise a (at least one) design, a (at least one) writing or a combination of both.

In the embodiment illustrated in Figures 3, 5 and 6, the component coupled to the electrochromic film 16 and provided with the graphic sign 22 is the ignition key 9.

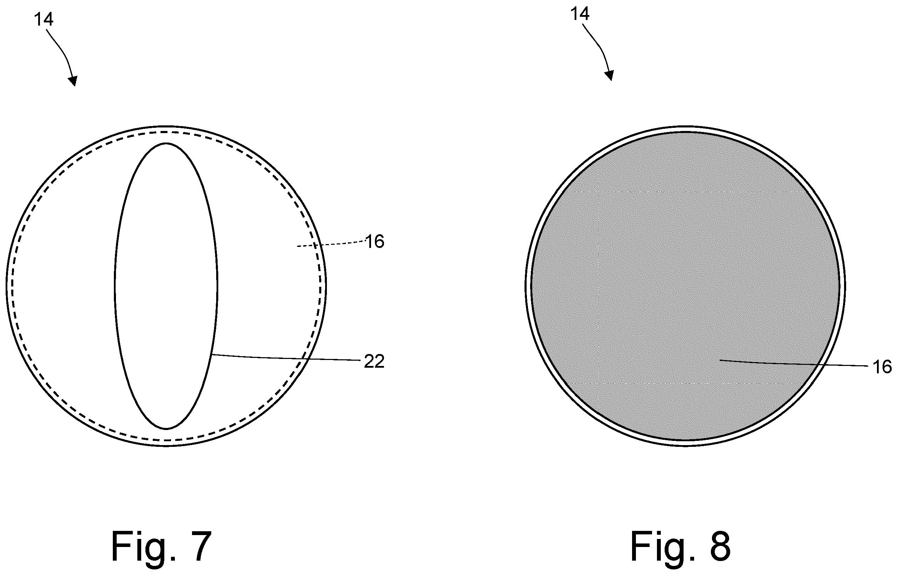

In the alternative embodiment illustrated in Figures 7 and 8, the component coupled to the electrochromic film 16 and provided with the graphic sign 22 is the cover 14 of the airbag housing of the steering wheel 13; Figure 7 illustrates the cover 14 when the electrochromic film 16 is transparent and thus allows seeing the graphic sign 22, whereas Figure 8 illustrates the cover 14 when the electrochromic film 16 is opaque and thus hides the graphic sign 22.

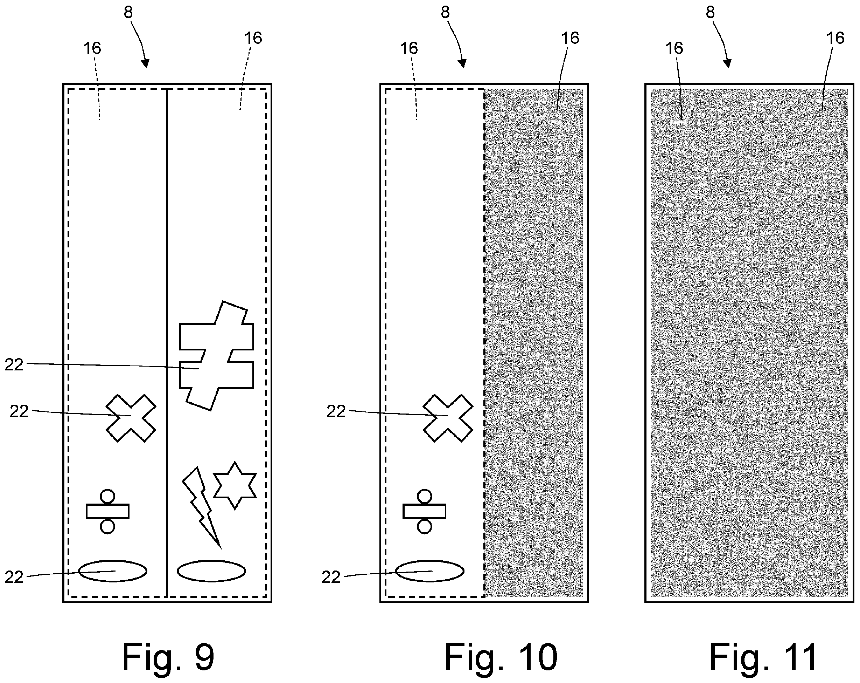

In the further embodiment illustrated in Figures 9, 10 and 11, the component coupled to the electrochromic film 16 and provided with the graphic sign 22 is the finishing panel 10 (or part of the finishing panel 10). In this embodiment, the finishing panel 10 is provided with two different electrochromic films 16 which are controllable separately and in an independent manner and each of which covers only a part of the wall 15 (in particular, the two electrochromic films 16 are arranged side by side and cover in a manner complementary to each other the wall 15). According to other embodiments, the wall 15 could be covered by three, four or more different electrochromic films 16 which are controllable separately and in an independent manner. Figure 7 illustrates the finishing panel 10 when both electrochromic films 16 are transparent and thus allow seeing all of the graphic signs 22, Figure 10 illustrates the finishing panel 10 when one electrochromic film 16 is transparent and the other electrochromic film 16 is opaque and thus only a part of the graphic signs 22 is visible, and Figure 11 illustrates the finishing panel 10 when both electrochromic films 16 are opaque and hide all of the graphic signs 22.

Obviously, it is also provided for embodiments in which a component provided with an electrochromic film 16 is devoid of the graphic sign 22 and therefore, when the electrochromic film 16 is transparent, only the surface finishing of the component is seen through the electrochromic film 16**.**

In all of the embodiments described in the foregoing, it is evident that the component coupled to the electrochromic film 16 is not provided with any (digital) controllable screen configured to display information; namely the component coupled to the electrochromic film 16 is not capable of autonomously changing its external appearance but the change of its external appearance is obtained only and solely by controlling the electrochromic film 16 (which can show or hide the underlying wall 15).

Furthermore, in all of the embodiments described in the foregoing, the wall 15 covered by the electrochromic film 16 always and only has one single unchanging appearance; namely the wall 15 covered by the electrochromic film 16 is passive and is not capable of autonomously changing its external appearance and the change of its external appearance is obtained only and solely by controlling the electrochromic film 16 (which can show or hide the underlying wall 15).

The embodiments described herein can be combined with one another.

The above-described applications of an electrochromic film 16 to a visible wall of a component of a vehicle are advantageously applied to any type of road vehicle (for example a car or a motorcycle) and also to any type of non-road vehicle.

The road vehicle 1 described above has numerous advantages.

Firstly, the road vehicle 1 described above has a (at least one) component with a variable appearance (namely which can change its appearance possibly also showing or hiding a graphic sign 22) which can have an even very wide dimension (and thus be particularly in evidence and immediately visible) though being at the same time extremely light (the electrochromic film 16 has a weight of a few grams per square decimetre) and having a definitely modest consumption of electric energy (the electrochromic film 16 essentially exploits the orienting effect of the electric field with an almost negligible circulation of electric current). In other words, in order to obtain a component capable of changing upon command its external appearance it is known to utilize digital screens which are anyway much bulkier, heavier and more energy-consuming than the electrochromic film 16.

Furthermore, the electrochromic film 16 is extremely flexible and can thus adapt to very different and also particularly complex shapes and the electrochromic film 16 is particularly resistant to impacts; therefore, the electrochromic film 16 is easily applicable to multiple components of the road vehicle 1 allowing changing upon command the aesthetics of the components in particular for transmitting in a simple, fast and intuitive manner information to the occupants of the road vehicle 1.

### LIST OF THE REFERENCE NUMERALS OF THE FIGURES

- 1: road vehicle
- 2: front wheels
- 3: rear wheels
- 4: powertrain system
- 5: passenger compartment
- 6: dashboard
- 7: windshield
- 8: central tunnel
- 9: ignition key
- 10: finishing panel
- 11: housing
- 12: gearshift control
- 13: steering wheel
- 14: cover
- 15: wall
- 16: electrochromic film
- 17: electric circuit
- 18: electrodes
- 19: battery
- 20: switch
- 21: control unit
- 22: graphic sign

## Claims

1. A vehicle (1) comprising a passenger compartment (5) and at least one component (9; 10; 14), which is opaque and non-reflective, is not provided with any controllable screen configured to display information, and has at least one wall (15) visible to an occupant of the passenger compartment (5) which always and only has one single unchanging appearance;
the vehicle (1) is **characterized in that** the component (9; 10; 14) comprises:
at least one electrochromic film (16) covering the wall (15); and
an electric circuit (17), which is connected to opposite ends of the electrochromic film (16) and is configured to apply, when necessary, an electric voltage to the electrochromic film (16) so as to change the optical characteristics of the electrochromic film (16).

2. The vehicle (1) according to claim 1, wherein the application of the electric voltage to the electrochromic film (16) changes the degree of transparency of the electrochromic film (16).

3. The vehicle (1) according to claim 2, wherein the electrochromic film (16) is transparent in the absence of electric voltage and becomes opaque in the presence of electric voltage.

4. The vehicle (1) according to claim 2, wherein the electrochromic film (16) is opaque in the absence of electric voltage and becomes transparent in the presence of electric voltage.

5. The vehicle (1) according to one of the claims from 1 to 4, wherein the wall (15) has at least one graphic sign (22), which is arranged under the electrochromic film (16).

6. The vehicle (1) according to claim 5, wherein the application of the electric voltage to the electrochromic film (16) changes the degree of transparency of the electrochromic film (16) to make the graphic sign (22) visible or hidden.

7. The vehicle (1) according to claim 6, wherein the graphic sign (22) is hidden in the absence of electric voltage and becomes visible in the presence of electric voltage or vice versa.

8. The vehicle (1) according to one of the claims from 1 to 7, wherein the component (9; 10; 14) comprises two different electrochromic films (16) which are controllable separately and in an independent manner and each of which covers only a part of the wall (15).

9. The vehicle (1) according to one of the claims from 1 to 8, wherein the component (9; 10; 14) is an ignition key (9).

10. The vehicle (1) according to one of the claims from 1 to 8, wherein:
in the passenger compartment (5) there is a steering wheel (13) centrally provided with a housing for an airbag closed at the front by an openable cover (14); and
the component (9; 10; 14) is the cover (14) of the airbag housing of the steering wheel (13).

11. The vehicle (1) according to one of the claims from 1 to 8, wherein the component (9; 10; 14) is a finishing panel (10) of the passenger compartment (5).

12. An ignition key (9) for a vehicle (1); the ignition key (9) is opaque and non-reflective, is not provided with any controllable screen configured to display information, and has at least one wall (15) which always and only has one single unchanging appearance;
the ignition key (9) is **characterized in that** it comprises:
at least one electrochromic film (16) covering the wall (15); and
an electric circuit (17), which is connected to opposite ends of the electrochromic film (16) and is configured to apply, when necessary, an electric voltage to the electrochromic film (16) so as to change the optical characteristics of the electrochromic film (16).

13. The ignition key (9) according to claim 12, wherein the application of the electric voltage to the electrochromic film (16) changes the degree of transparency of the electrochromic film (16).

14. The ignition key (9) according to claim 12 or 13, wherein:
the wall (15) has at least one graphic sign (22), which is arranged under the electrochromic film (16); and
the application of the electric voltage to the electrochromic film (16) changes the degree of transparency of the electrochromic film (16) to make the graphic sign (22) visible or hidden.

15. The ignition key (9) according to claim 14, wherein the graphic sign (22) is hidden in the absence of electric voltage and becomes visible in the presence of electric voltage or vice versa.
